Europäisches Patentamt

European Patent Office

Office européen des brevets

(11) Numéro de publication: **0 317 395 B1**

(19)

(12) **FASCICULE DE BREVET EUROPEEN**

(45) Date de publication de fascicule du brevet: **21.07.93**  (51) Int. Cl.⁵: **C09K 17/00**

(21) Numéro de dépôt: **88402811.9**

(22) Date de dépôt: **08.11.88**

(54) Produit pulvérulent stabilisateur des sols en place et méthode de mise en oeuvre.

(30) Priorité: **13.11.87 FR 8715722**

(43) Date de publication de la demande:
**24.05.89 Bulletin 89/21**

(45) Mention de la délivrance du brevet:
**21.07.93 Bulletin 93/29**

(84) Etats contractants désignés:
**BE DE FR GB LU NL**

(56) Documents cités:
**EP-A- 0 072 213**
**FR-A- 1 498 915**
**GB-A- 2 117 753**
**US-A- 4 163 657**

(73) Titulaire: **Bonier-Sahuc, Monique**
**5 rue Jobbé Duval**
**F-75015 Paris(FR)**

(72) Inventeur: **Bonier-Sahuc, Monique**
**5 rue Jobbé Duval**
**F-75015 Paris(FR)**

**Description**

La présente invention est du domaine de la stabilisation des sols . Elle vise plus particulièrement un produit pulvérulent stabilisateur des sols en place,notamment dans les chantiers de travaux publics routiers , et la méthode de mise en oeuvre dudit produit stabilisateur .

Jusqu'à présent , pour stabiliser les fonds de forme destinés à soutenir les chaussées et les plateformes , on utilisait un certain nombre de charges , notamment liquides, que l'on mélangeait avec divers produits pondéreux , le mélange étant appliqué en plusieurs passes d'épandage, ce qui nécessitait également plusieurs passes de malaxage dans le traitement ultérieur des fonds de forme .En outre l'utilisation de produits liquides par temps de pluie se traduisait par une mauvaise qualité du fond de forme .

Parmi les documents de l'art antérieur, on peut citer FR-A-1 498 915 qui se rapporte à des compositions pour la stabilisation des sols, incorporant comme agent émulsionnant du chlorure de distéaryl-diméthyl ammonium. Toutefois, il est clairement indiqué dans la description que ces compositions sont appliquées sous forme d'une émulsion aqueuse pulvérisée à l'état de gouttelettes; ce document ne divulgue donc pas un produit stabilisateur appliqué à l'état pulvérulent et résultant de l'association de produits pulvérulents . Par ailleurs GB-A-2 117 753 concerne des compositions pour usages variés, notamment dans le domaine des matériaux de construction et/ou d'isolation,ces compositions renferment des ciments et des plâtres et exigent pour leur préparation une quantité suffisante d'eau pour assurer leur prise; il ne s'agit donc pas d'un produit stabilisateur de sol, obtenu à partir de produits pulvérulents et appliqué à l'état pulvérulent . En outre ce document ne décrit ni ne suggère l'utilisation desdites compositions pour stabiliser les sols.

Un but de la présente invention est de fournir un produit pulvérulent stabilisateur permettant d'augmenter dans une très large mesure la résistance mécanique des sols ainsi prétraités .

Un autre but de la présente invention est de fournir un produit pulvérulent stabilisateur conférant au sol des propriétés d'anti-géllivité, ainsi qu'une amélioration des propriétés d'imperméabilisation -étanchéité desdits sols.

Encore un but de l'invention est de fournir un produit pulvérulent stabilisateur des sols en place , supprimant d'une part les effets de gonflement et d'autre part les effets de fissuration.

Encore un autre but de la présente invention est de fournir un produit pulvérulent stabilisateur des sols permettant de réduire la manipulation de matériaux pondéreux, et dont la mise en oeuvre rapide permet de l'utiliser en une seule passe d'épandage et une seule passe de malaxage .

Un autre but encore de l'invention est un produit utilisable pour traiter la terre en vue de son imperméabilisation,notamment dans les ouvrages de lagunage et de retenue d'eau.

La présente invention a donc pour objet un produit pulvérulent stabilisateur des sols en place , caractérisé en ce qu'il est constitué par l'association d'une amine grasse pulvérulente, telle que le chlorure de distéaryl-diméthylammonium pulvérulent et d'au moins un produit pulvérulent choisi parmi les ciments, les chaux éteintes et les cendres volantes.

Selon une formulation particulière du produit pulvérulent stabilisateur des sols de l'invention, on utilise un mélange constitué de 1 à 6% en poids, de préférence 4% , de chlorure de distéaryle diméthylammonium pulvérulent et de 94 à 99% en poids,de préférence 96% de ciment . On utilise avantageusement un chlorure de distéaryle diméthylammonium présentant un diamètre moyen des particules de l'ordre de 0,1mm à 0,7 mm , pour un ciment présentant un diamètre moyen des particules de l'ordre de 0,4 à 1 $\mu$. Le produit pulvérulent stabilisateur des sols de l'invention peut également renfermer dans des proportions compatibles à son usage, des quantités mineures de produits aminés choisis parmi les chlorures d'amines quaternaires, les chlorures d'amines libres et leurs mélanges .

La présente invention s'étend également à une méthode de mise en oeuvre du produit pulvérulent stabilisateur des sols en place , caractérisée en ce qu'on applique de 1 à 6 % en volume de produit stabilisateur par m$^3$ de terre , ce qui correspond selon les sols à une application de 5 à 40 kgs de produit stabilisateur par m$^2$ de terre sur une épaisseur de 10 à 40 cm , par exemple de 20 à 30 cm .

D'autres avantages et caractéristiques de la présente invention apparaîtront à la lecture de la description suivante non limitative d'exemples de mise en oeuvre du produit pulvérulent stabilisateur des sols selon la présente invention. Dans les exemples 1 à 9, on entend par produit pulvérulent stabilisateur des sols le mélange constitué en poids de 4% de chlorure de distéaryle diméthylammonium pour 96% de ciment .Toutes les mesures et tous les résultats en cause ont été réalisés selon les méthodes habituelles préconisées par le Laboratoire Central des Ponts et Chaussées (France). Mode opératoire du 20 Décembre 1972, circulaire 72-213 Ministère de l'Aménagement du Territoire de l'Equipement, du Logement et du Tourisme.Les essais de portance sont effectués avec l'appareil Dynapak.

EXEMPLE 1

Pour réaliser un fond de forme de 6000 m$^2$ destiné à soutenir une chaussée lourde classée type T2 selon les normes du SETRA (Service des Etudes, Transports Routiers et Automobiles) sur les structures de chaussée, Guide des Chaussées 1977 ,on traite la terre par malaxage de 1,5 % en volume de produit stabilisateur par m$^3$, ce qui correspond, dans ce cas, à 6 kgs par mètre carré sur 25 cm d'épaisseur . Après une durée de mise en oeuvre de deux jours , on note une facilité de manipulation, moins de poussière, pas d'enfoncement dans le produit pulvérulent une fois répandu , alors que les opérations peuvent se faire en une seule passe d'épandage et une seule passe de malaxage , ce qui se traduit par un gain de temps d'environ deux jours par rapport à un chantier utilisant des produits conventionnels . Sur ce chantier , on a noté qu'il était impossible d'attaquer la couche de forme , deux mois après le travail , pour y creuser des tranchées . Les essais de plaques réalisés ont montré que la portance moyenne du fond de forme telle qu'exprimée en module de Westergaard, est de K 123,0 en MN/m$^3$, tandis que le module EV2 était de 69,2 MPa. Un essai au pénétromètre jusqu'à 15MPa a été réalisé après 5 jours de traitement .

EXEMPLE 2

On a réalisé un sous-dallage en béton sur 1100m$^2$ sur une terre du type limon marron foncé présentant une densité sèche maximale de 1,77 , en utilisant,1,5% de produit stabilisateur de l'invention par m$^3$ de limon, c'est-à-dire 6 kgs par m$^2$ sur 25 cm d'épaisseur . Les mêmes observations qu'à l'exemple 1 ont été faites sur le chantier . Des prises des teneurs d'eau au gamma-densimètre 11 jours après la mise en oeuvre ont montré une teneur en eau moyenne de 20,4 % pour une densité moyenne de 1,51.
Des essais à 10,7MPa de moyenne ont été effectués au pénétromètre trois semaines après la mise en oeuvre, ce qui est très satisfaisant .

EXEMPLE 3

On a réalisé une couche de base sous 7 cm$^2$ d'enrobé pour une plate-forme à trafic léger de 17 000 m$^2$. Pour ce faire, on a utilisé , 1,5% de produit stabilisateur de l'invention par m$^3$ , à savoir dans ce cas 6 kgs par m$^2$ sur 25 cm d'épaisseur . L'opération a duré 2 jours, et du fait du faible dosage appliqué, après malaxage de la terre ainsi traitée avec la chaux , le compacteur est passé une fois pour répandre le produit stabilisateur sur le sol plat facilitant ainsi l'homogénéité et la régularité du traitement . Une comparaison a été effectuée en réalisant une partie de la plate-forme avec 6 % de ciment par m$^3$ au lieu de 1,5 % par m$^3$ de produit stabilisateur , comme spécifié ci-dessus. Il a été impossible de détecter une différence entre la zone traitée à 6% de ciment et la zone traitée à 1,5 % du produit stabilisateur de l'invention. 8 jours après le traitement: un essai au pénétromètre a atteint la valeur de 25 MPa.

EXEMPLE 4

Le produit stabilisateur de l'invention a été utilisé dans un chantier destiné à stabiliser une voie légère de 4000 m$^2$ revêtue d'un gravillonnage et d'un enrobé de 4 cm .
Le sol était constitué d'un limon présentant une teneur en eau optimale de 16,3 % et une densité sèche maximale de 1,78. Le produit stabilisateur de l'invention a été appliqué à raison de 1,5 % par m$^3$, soit dans ce cas 6 kgs par m$^2$ sur 25 cm d'épaisseur . Après une durée de mise en oeuvre d'une journée, on a observé une facilité de manipulation, se traduisant par un gain de temps du fait également de la faible quantité incorporée dans le sol . Les essais de pénétromètre effectués 2 jours après ont donné les résultats suivants .

```
moyenne des essais : à  3 cm 14,5 MPa
                     à  6 cm 15,4 MPa
                     à  9 cm 17,2 MPa
                     à 12cm 16,2 MPa
```

3

```
à 15cm 19,8 MPa.
à 18cm 22,9 MPa
à 21cm 17,8 Mpa
à 24cm 12,6 MPa
```

EXEMPLE 5

Pour réaliser un fond de forme dans un tunnel destiné à la mise en place d'un chemin pour piétons en terre crue stabilisée , on a utilisé le produit stabilisateur de l'invention à raison de 2% par $m^3$ d'un mélange de terre limoneuse très argileuse et d'une terre sablonneuse dans la proportion de 50-50, soit , dans ce cas , 10 kgs par $m^2$ sur une épaisseur die 30cm. Le mélange a été effectué hors du site et le produit a été transporté par camions jusqu'au tunnel . La mise en place d'une planche de 16 x 3 x 0,3 mètres s'est effectuée en trois couches de 0,1 mètre avec deux passages de compacteurs sur les deux premières couches , la troisième étant spécialement finie pour éviter toute trace de rouleau . Il est à noter qu'il est nécessaire, dans une telle mise en oeuvre, d'être relativement rapide lors du compactage pour éviter les reprises sur les bords du chemin, la terre devenant rapidement très dure , tandis qu'un durcissement évident a été constaté le lendemain. Un essai au moyen d'un passage répété d'un véhicule chargé de graviers sur une partie de la planche d'essais n'a montré aucune altération de la surface de la terre .

EXEMPLE 6

Pour stabiliser un fond de forme sur 5800 $m^2$ destiné à soutenir une chaussée lourde type $T_2$, on a utilisé le produit stabilisateur de l'invention à raison de 1,5% par $m^3$, ce qui correspond à 6 kgs par $m^2$ sur 25 cm d'épaisseur. Un traitement à la chaux à raison de 2% par $m^3$ a été également réalisé, la teneur en eau du sol au moment des travaux de chantier étant de 16% . Après une durée de mise en oeuvre de 1,5 jour , les essais de plaques ont montré que la portance moyenne est de K 126 en $MN/m^3$.

EXEMPLE 7

Pour stabiliser une voie légère et plusieurs petits parkings revêtus d'un gravillonnage et d'un enrobé de 4 cm , pour une superficie totale de 10 000 $m^2$ , on a utilisé le produit stabilisateur sec de l'invention à raison de 1,5% par $m^3$ , soit 6 kgs par $m^2$ sur 25 cm d'épaisseur, la durée de mise en oeuvre étant de 2 jours. Les essais de plaque ont montré que la portance moyenne est de K 90 en $MN/m^3$.

EXEMPLE 8

Afin de stabiliser une couche de fondation sur 2000 $m^2$ pour un parking (couche de base : 8 cm grave bitume + 6 cm d'enrobé), on a réalisé un passage de chaux vive à 2% sur 30 cm d'épaisseur suivi d'un passage de produit stabilisateur sec de l'invention à 1,5 % sur 25 cm d'épaisseur pendant une durée de mise en oeuvre d'une demi-journée. Les essais de portance Dynapak ont montré un coefficient de restitution (R) à environ 7 jours de 0,65 pour 0,63 demandé et une valeur moyenne du module dynamique (E) de 92 MPa.

EXEMPLE 9

Afin de stabiliser un parking de voitures légères de 5500 $m^2$ revêtu d'un enrobé de 7 cm, on a réalisé un passage de chaux vive à 3% sur 30 cm d'épaisseur suivi d'un passage de produit stabilisateur sec de l'invention à 1,5% sur 25 cm d'épaisseur, soit 6 $kg/m^2$ . La mise en oeuvre a duré 6 heures.

Les essais effectués ont montré un module moyen ($EV_2$) de 133,1 MPa à 7 jours . Le rapport de modules $EV_2/EV_1$ était supérieur à 1,68.

EXEMPLE 10

Des résultats équivalents à ceux de l'exemple 1 ont été obtenus en surélevant de 30 cm une chaussée très lourde avec un matériau de carrière stabilisé au moyen du produit stabilisateur composé en poids de 2% en diméthyl distéaryle ammonium pulvérulent et de 98% de ciment.

EXEMPLE 11

Grâce aux propriétés d'étanchéité des sols et d'hydrophobation de la terre,les produits stabilisateurs de l'invention sont utilisés pour traiter la terre dans les chantiers destinés à la construction de bassins de retenue d'eau, de canaux et autres ouvrages de lagunage. La perméabilité obtenue sur des limons argileux est de l'ordre de $10^{-9}$ cm/sec.

Ainsi le produit stabilisateur de l'invention permet la réalisation de la stabilisation des sols en place pour toutes les constructions routières en couche de forme,en couche de fondation et en couche de base, les voieries lourdes, les voieries légères, l'imperméabilisation et l'étanchéité des bassins de retenue d'eau,la stabilisation des talus et autres travaux de stabilisation au niveau des sols, et ce, grâce à la composition dudit produit obtenu à partir d'un mélange judicieux de chlorure de distéaryl-diméthylammonium et d'un produit pulvérulent simple ou composite approprié à l'usage .

**Revendications**

1.  Produit pulvérulent stabilisateur des sols en place, caractérisé en ce qu'il est constitué par l'association d'une amine grasse pulvérulente, telle que du chlorure de distéaryl-diméthylammonium pulvérulent et d'au moins un produit pulvérulent , choisi parmi les ciments, les chaux éteintes, et les cendres volantes.

2.  Produit pulvérulent stabilisateur selon la revendication 1, caractérisé en ce qu'il est constitué de 1 à 6% en poids, de préférence 4% , de chlorure de distéaryle diméthylammonium pulvérulent et de 94 à 99% en poids, de préférence 96%, de ciments.

3.  Produit pulvérulent stabilisateur selon l'une quelconque des revendications 1 ou 2, caractérisé en ce que le chlorure de distéaryl-diméthylammonium présente un diamètre moyen des particules de l'ordre de 0,1 mm à 0,7 mm tandis que le ciment présente un diamètre moyen des particules de 0,4 $\mu$ à 1 $\mu$ .

4.  Méthode de traitement des sols en place mettant en oeuvre le produit pulvérulent stabilisateur selon l'une quelconque des revendications 1 à 3, caractérisée en ce que l'on applique de 1 à 6% en volume de produit stabilisateur par m$^3$ de terre constitutive du sol, ce qui se traduit par une application de 5 à 40 kgs de produit stabilisateur par m$^2$ de sol sur une épaisseur de 10 à 40 cm, en particulier de 20 à 30 cm.

**Claims**

1.  Pulverulent Product for stabilizing soils in place comprising a pulverulent fatty amine such as distearyl dimethylammonium chloride and at least one pulverulent product chosen from cements, slaked limes and fly ash.

2.  Pulverulent stabilizer product according to Claim 1 comprising 1 to 6% by weight, preferably 4%, of pulverulent distearyl dimethylammonium chloride and of 94 to 99% by weight, preferably 96% of cement.

3.  Pulverulent stabilizer product according to Claim 1 or 2 in which the distearyl dimethylammonium chloride has a mean particle diameter of the order of 0,1 mm to 0,7 mm while the cement has a mean particle diameter of 0,4 $\mu$ to 1 $\mu$.

4.  The treatment method of soils in place using the pulverulent stabilizer product according to Claims 1 through 3, comprising 1 to 6% by volume of the stabilizer product per m3 of earth forming part of the soil which results in an application of 5 to 40 kgs of stabilizer product per m2 of soil over a thickness of 10 to 40 cm, preferably 20 to 30 cm.

**Patentansprüche**

1. PulverförmigesProdukt fuer im Platz Bodenstabilisierung bezeichnet und bestehend durch Zusammensetzung eine pulverförmige Fettamine als distearyl-dimethylammonium Chlorid und mindestens ein PulverförmigesProdukt ausgewählt under Cement, geloeschte Kalkstein und Aschen.

2. Pulverförmiges StabilisierungsProdukt gemäss Anspruch 1 bezeichnet als bestehend aus 1% bis 6% im Gewicht, bevorzüglich 4% pulverförmiges distearyl dimethylammonium Chlorid und 94% bis 99% im Gewicht bevorzüglich 96% Cement.

3. Pulverförmiges StabilisierungsProdukt gemaess irquendwelche Ansprüche Punkt 1 oder 2 bezeichnet als das distearyl dimethylammonium Chlorid ein mittelmässig Durchmesser der Partikeln im Rahmen von 0,1 mm bis 0,7 mm während das Cement ein mittelmässig Durchmesser der Partikeln von 0,4 μ bis 1 μ anbietet.

4. Behandlungsmethode der Boden im Platz mit/bei Gebrauch des Pulverförmiges StabilisierungsProdukt gemäss irgendeine der Ansprüche 1 bis 3 bezeichnet als man 1% bis 6% im Volumen von StabilisierungsProdukt per m3 aus bestehende Erde des Bodens verwendet, was durch einer Anwendung von 5 bis 40 kg des StabilisierungsProduktes per Boden m2 entsteht auf einer Dichte von 10 bis 40 cm besonders 20 bis 30 cm.